(19) Europäisches Patentamt
European Patent Office
Office européen des brevets

(11) **EP 2 554 566 A1**

(12) **EUROPEAN PATENT APPLICATION**
published in accordance with Art. 153(4) EPC

(43) Date of publication:
**06.02.2013 Bulletin 2013/06**

(51) Int Cl.:
**C08G 69/26** (2006.01)

(21) Application number: **11759247.7**

(22) Date of filing: **15.03.2011**

(86) International application number:
**PCT/JP2011/055987**

(87) International publication number:
**WO 2011/118441 (29.09.2011 Gazette 2011/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2010 JP 2010072341**

(71) Applicant: **Unitika, Ltd.**
**Amagasaki-shi, Hyogo 660-0824 (JP)**

(72) Inventors:
• **NAKAI, Makoto**
**Kyoto 611-0021 (JP)**

• **MORIMOTO, Mariko**
**Kyoto 611-0021 (JP)**
• **TAKEDA, Hirotaka**
**Kyoto 611-0021 (JP)**

(74) Representative: **Pautex Schneider, Nicole Véronique et al**
**Novagraaf International SA**
**Chemin de l'Echo 3**
**1213 Onex (CH)**

(54) **SEMIAROMATIC POLYAMIDE AND METHOD FOR PRODUCING SAME**

(57) The semiaromatic polyamide of the present invention includes a terephthalic acid component and a diamine component, wherein the diamine component is any of 1,8-octanediamine, 1,10-decanediamine and 1,12-dodecanediamine, and the proportion of the triamine unit in relation to the diamine unit in the polyamide is 0.3 mol% or less.

EP 2 554 566 A1

**Description**

Technical Field

The present invention relates to a semiaromatic polyamide including a terephthalic acid component and a linear diamine component in which the number of carbon atoms is even.

Background Art

As an industrialized semiaromatic polyamide, polyamide 6T made of a terephthalic acid component and a 1,6-hexamethylenediamine component and polyamide 9T made of a terephthalic acid component and a 1,9-nonanediamine component have been known.

Such semiaromatic polyamides as aforementioned are higher in heat resistance and low in water absorption rate, and hence are excellent in dimensional stability, as compared to aliphatic polyamides such as nylon 6 and nylon 66. Accordingly, by taking advantage of such properties, semiaromatic polyamides are widely used particularly in the fields of electric/electronic components and molded articles for automobile components. Recently, in these fields, demands for further improvement of the heat resistance and further improvement of the molding productivity have been enhanced.

For the purpose of improving the heat resistance, generally the use of polymers having higher melting points have been investigated. However, in the case of the semiaromatic polyamide, the melting point and the decomposition temperature are close to each other, and hence in a polymer having a high melting point, unfortunately the performance degradation or the coloration of the product due to the thermal decomposition of the polyamide at the time of melt processing is caused in some cases.

When a plurality of polyamides having the same melting point are compared with each other, it is found that the higher the crystallinity is, the more the heat resistance is improved.

From the viewpoint of the improvement of the molding productivity, in general, advantageously, the higher crystallinity a polymer has, the shorter the retention time of the polymer in a mold can be made.

The homopolymer of polyamide 6T has an excessively high melting point, as high as 370°C, and hence the thermal decomposition of polyamide 6T at the time of melt processing thereof cannot be suppressed. Accordingly, polyamide 6T is used under the conditions that the melting point thereof is sufficiently decreased by introducing a large amount of a copolymerization component. However, in such copolymerized polyamide 6T, the crystallinity is impaired and a high-crystallinity molded article has not been able to be obtained at a rapid crystallization rate.

Polyamide 9T has a diamine longer in terms of the number of carbon atoms than the diamine in polyamide 6T, and is lower in melting point than polyamide 6T so as to make minor the problem at the time of melt processing. However, in polyamide 9T, the number of the carbon atoms in the diamine as the constituent of polyamide 9T is odd, and hence the chemical structure of the polyamide is asymmetric so as to impair the crystallinity of polyamide 9T. Accordingly, polyamide 9T is not satisfactory for the purpose of being used as a semiaromatic polyamide required to have a high crystallinity.

Examples of a polyamide to solve the aforementioned problems of polyamide 6T and polyamide 9T include polyamide 10T made of terephthalic acid and 1,10-decanediamine. JP6-239990A discloses that polyamide 10T resin is formed into a molded article high in crystallinity and excellent in heat resistance.

On the other hand, as is known as a problem occurring in the production of semiaromatic polyamide, the triamine produced by the condensation of the diamine component as the raw material causes gel to be produced in the polyamide and the physical properties of the polyamide are impaired.

In Koubunshi Kagaku, Vol. 25, No. 277, p. 318 (1968) (hereinafter, simply referred to as "Koubunshi Kagaku" as the case may be), it is disclosed that a semiaromatic polyamide made of an aliphatic diamine and terephthalic acid undergoes the occurrence of gelation due to the production of a triamine as a by-product. Further, it is disclosed that in the case where such a semiaromatic polyamide is obtained, when the polymerization is performed without addition of water, the amount of the triamine in the polyamide is reduced.

As a method for producing a semiaromatic polyamide in which the amount of the triamine is reduced, JP2008-239908A discloses a method in which mainly the conditions of the solid phase polymerization in the latter half of the polymerization step are appropriately regulated.

JP2001-200053A discloses a production method for obtaining a condensation-based polyamide by using a slurry composed of xylenediamine in a molten state and a solid dicarboxylic acid and thus by regulating the molar balance between the diamine and the dicarboxylic acid without addition of water.

Summary of Invention

Technical Problem

In JP6-239990A, the amount of triamine in polyamide 10T is not measured. However, it can be interpreted that in JP6-239990A water is added at the onset of the polymerization of polyamide, and as is understood by reference to "Koubunshi Kagaku," the production of triamine at the early stage of the polymerization due to the addition of water cannot be suppressed, and hence a large amount of gel is contained in the obtained polyamide 10T. Also in JP2008-239908A, water is added at the onset of the polymerization, consequently, as in JP6-239990A, the production of triamine at the early stage of the polymerization due to the addition of water cannot be suppressed, and hence it is difficult to obtain a polyamide containing small amount of gel.

Moreover, the technique described in "Koubunshi Kagaku" is unsuitable for industrialization. In "Koubunshi Kagaku," a semiaromatic polyamide is obtained by melt polymerization. In the application of melt polymerization to a system including a semiaromatic polyamide having a high melting point, the thermal decomposition at the time of polymerization is disadvantageously involved. Accordingly, the application of melt polymerization to industrial production is anticipated to result in the occurrence of problems with respect to productivity and quality aspect. Also in "Koubunshi Kagaku," the polymerization of the semiaromatic polyamide is performed starting from a state of a salt, and hence in the course of the salt synthesis, a large amount of water is required. Additionally, it is necessary to perform the concentration of the water under reduced pressure. Accordingly, the technique described in "Koubunshi Kagaku" is unsuitable for industrialization also from the viewpoint of the apparatus capacity or the energy efficiency.

In JP2001-200053A, it is essential to regulate the molar balance between the fed raw materials before the polymerization step, and other conditions are not mentioned. The melt polymerization is performed at a temperature equal to or higher than the melting point of the polymer, and hence, in the same manner as in "Koubunshi Kagaku," JP2001-200053A involves problems in the quality and the productivity of polyamide when the technique disclosed in JP2001-200053A is applied to the semiaromatic polyamide having a high melting point.

In view of such problems as aforementioned, an object of the present invention is to provide a semiaromatic polyamide high in crystallinity and excellent in heat resistance. Further, another object of the present invention is to provide a method for producing such a semiaromatic polyamide.

Solution to Problem

For the purpose of solving such problems as aforementioned, the present inventors performed a series of diligent studies, and consequently have reached the present invention by discovering that the semiaromatic polyamide sufficiently reduced in the amount of triamine with a specific diamine component is high in crystallinity and excellent in heat resistance.

Specifically, the gist of the present invention is constituted as follows.

(1) A semiaromatic polyamide including a terephthalic acid component and a diamine component, wherein the diamine component is any of 1,8-octanediamine, 1,10-decanediamine and 1,12-dodecane, and the proportion of the triamine unit in relation to the diamine unit in the polyamide is 0.3 mol% or less.

(2) The semiaromatic polyamide according to (1), including a copolymerization component other than the terephthalic acid component and the diamine component, which are main components, in a proportion of 0 to 5 mol% in relation to the total number of moles of the raw material monomers.

(3) The semiaromatic polyamide according to (1) or (2), wherein the melting point thereof measured by using a differential scanning calorimeter is 280°C to 340°C.

(4) The semiaromatic polyamide according to any one of (1) to (3), wherein the degree of supercooling ΔT measured by using the differential scanning calorimeter is 40°C or less.

(5) A method for producing the semiaromatic polyamide according to any one of (1) to (4), including the following steps (i) and (ii):

(i) obtaining a mixed liquid by stirring and mixing a suspension liquid including a diamine in a molten state and solid terephthalic acid at 80°C or higher to 150°C or lower, in the presence of water and/or an organic solvent having a total amount of water and the organic solvent of 5 parts by mass in relation to 100 parts by mass of a total amount of terephthalic acid and the diamine; and

(ii) obtaining a mixture of a salt and a low polymeric substance by performing, in the mixed liquid obtained in the step (i) and at a temperature lower than the melting point of the finally produced polyamide, the production of the salt due to a reaction between terephthalic acid and the diamine and the production reaction of a low polymer due to the polymerization of the salt.

(6) A method for producing the semiaromatic polyamide according to any one of (1) to (4), including the following steps (i) and (ii):

(i) adding the diamine to a terephthalic acid powder in such a way that the terephthalic acid powder is beforehand heated to a temperature equal to or higher than the melting point of the diamine and equal to or lower than the melting point of the dicarboxylic acid, and the diamine is added to the terephthalic acid powder at a temperature equal to or higher than the melting point of the diamine and equal to or lower than the melting point of terephthalic acid, so as to maintain the powder state of terephthalic acid, without substantially including water; and

(ii) obtaining a mixture of a salt and a low polymeric substance by performing, in the mixed liquid obtained in the step (i) and at a temperature lower than the melting point of the finally produced polyamide, the production of the salt due to the reaction between terephthalic acid and the diamine and the production reaction of a low polymer due to the polymerization of the salt.

(7) The method for producing a polyamide according to (5) or (6), further including the following step (iii):

(iii) performing the solid phase polymerization of the mixture obtained in the step (ii) while maintaining the temperature lower than the melting point of the produced polyamide.

(8) A molded article produced by molding the polyamide according to any one of (1) to (4).

Advantageous Effects of Invention

According to the present invention, a semiaromatic polyamide high in heat resistance and high in crystallinity can be obtained. Additionally, the molded article obtained by molding the polyamide is high in flexural strength and flexural modulus of elasticity, and excellent in mechanical strength.

Description of Embodiments

Hereinafter, the present invention is described in detail. The semiaromatic polyamide of the present invention is a polyamide including a dicarboxylic acid component and a diamine component. In the present invention, from the viewpoint of high crystallinity, it is necessary to use a dicarboxylic acid component having a specific chemical structure and a diamine component having a specific chemical structure.

In the present invention, it is necessary to use terephthalic acid as the dicarboxylic acid component. This is because terephthalic acid is high in the symmetry of the chemical structure among aromatic dicarboxylic acids and is most preferable for the purpose of obtaining a semiaromatic polyamide having a high crystallinity.

In the present invention, the diamine component constituting the semiaromatic polyamide is a linear aliphatic diamine which is any of 1,8-octanediamine, 1,10-decanediamine and 1,12-dodecanediamine. The linear aliphatic diamine is high in the chemical structural symmetry, and hence is preferable for the purpose of obtaining a semiaromatic polyamide having a high crystallinity.

The reason for the necessity that the number of carbon atoms of the used diamine should be even is described below. In general, the so-called even-odd effect develops in polyamide. Specifically, when the number of carbon atoms of the monomer unit of the used diamine component is even, the polyamide takes a more stable crystal structure as compared to the case where the concerned number of carbon atoms is odd, and hence the effect such that the crystallinity of the polyamide is improved develops. Accordingly, from the viewpoint of high crystallinity, the number of carbon atoms of the linear aliphatic diamine is required to be even.

When the number of carbon atoms of the diamine is less than 8, unpreferably the melting point of the obtained semiaromatic polyamide exceeds 340°C to be higher than the decomposition temperature. On the other hand, when the number of carbon atoms of the diamine exceeds 12, the melting point of the obtained semiaromatic polyamide is lower than 280°C, and unpreferably the heat resistance is insufficient for the practical use of the semiaromatic polyamide. In the diamines respectively having the number of carbon atoms of 9 and 11, the crystallinity is insufficient due to the even-odd effect of the polyamide.

In the semiaromatic polyamide of the present invention, the dicarboxylic acid component other than the terephthalic acid component and/or the diamine component of a type other than the type of the linear aliphatic diamine component having the number of carbon atoms of 8, 10 or 12 (hereinafter, referred to as a "copolymerization component" as the case may be) may also be copolymerized. The copolymerization component is preferably included in an amount of 5 mol% or less in relation to the total number of moles (100 mol%) of the raw material monomers; it is more preferable that substantially no copolymerization component be included. This is because, from the viewpoint of high crystallinity, it is preferable that the polyamide have a highly regular structure closer to a homopolymer than a copolymer having an irregular chemical structure. Specifically, when the content of the copolymerization component exceeds 5 mol%, the crystallinity is degraded, and a semiaromatic polyamide having a high crystallinity cannot be obtained in some cases.

Examples of the dicarboxylic acid component other than terephthalic acid, usable as the copolymerization component of the semiaromatic polyamide of the present invention include: aliphatic dicarboxylic acids such as oxalic acid, malonic acid, succinic acid, glutaric acid, adipic acid, pimelic acid, suberic acid, azelaic acid, sebacic acid, undecanedioic acid and dodecanedioic acid; alicyclic dicarboxylic acids such as cyclohexanedicarboxylic acid; and aromatic dicarboxylic acid such as phthalic acid and isophthalic acid and naphthalenedicarboxylic acid.

Examples of the other diamine components usable as the copolymerization component of the semiaromatic polyamide of the present invention include: aliphatic diamines such as 1,2-ethanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine and 1,12-dodecanediamine; alicyclic diamines such as cyclohexanediamine; and aromatic diamines such as xylylenediamine. Any of above-listed 1,8-octanediamine, 1,10-decanediamine and 1,12-dodecanediamine is an essential diamine component of the semiaromatic polyamide of the present invention. When any of 1,8-octanediamine, 1,10-decanediamine and 1,12-dodecanediamine is used as the essential diamine component, the diamine components other than the used diamine component are used as the copolymerization components. For example, when 1,8-octanediamine is used as the essential diamine component, 1,10-decanediamine and 1,12-dodecanediamine are used as the copolymerization components.

In the semiaromatic polyamide of the present invention, if necessary, lactams such as caprolactam may be copolymerized.

In the present invention, the molar ratio between the terephthalic acid component and the diamine component, which are the main components, is such that the ratio of terephthalic acid component/diamine component is preferably 45/55 to 55/45 and more preferably 47.5/52.5 to 52.5/47.5. The molar ratio between the terephthalic acid component and the diamine component set to fall within the range from 45/55 to 55/45 enables a high molecular weight semiaromatic polyamide to be obtained.

The semiaromatic polyamide of the present invention is required to be sufficiently reduced in the amount of triamine. In the semiaromatic polyamide, the triamine structure tends to be by-produced due to the condensation reaction between the diamine molecules at the time of polymerization. When the amount of triamine is large, cross-linked structure is produced in the molecular chain, and the cross-linked structure restrains the movement and the arrangement of the molecular chain to degrade the crystallinity. Also, when the amount of triamine is large, gel is generated in a large amount. Therefore, when the semiaromatic polyamide is used after filtration with a filter as in the case where film or fiber is produced, the upstream pressure change of the filter becomes large to make continuous production impossible.

Accordingly, the proportion of the triamine unit included in the semiaromatic polyamide of the present invention is required to be 0.3 mol% or less and preferably 0.2 mol% or less in relation to the diamine unit. When the proportion of the triamine structure in the polyamide exceeds 0.3 mol% in relation to the diamine unit, there occur problems such that the crystallinity of the polyamide is degraded or gel is generated to degrade the continuous productivity and the color tone is degraded.

For the purpose of setting the proportion of the triamine unit to be 0.3 mol% or less in relation to the diamine unit, when the salt is produced from the terephthalic acid component and the diamine component, the mixing amount of water and/or the organic solvent is required to be 5 parts by mass or less in relation to 100 parts by mass of the total amount of the raw material monomers.

In general, a method is used in which for the purpose of allowing the heat polymerization reaction to proceed uniformly, raw materials are mixed, coexistent with water, and heated to allow dehydration reaction to proceed. However, in such a method, when the total amount of water and the organic solvent at the time of polymerization is increased so as to exceed 5 parts by mass in relation to 100 parts by mass of the total amount of the raw material monomers, disadvantageously the increase of the degree of polymerization is suppressed. In this case, the residence time in the polymerization apparatus is long in the state having a large number of amine terminals, and hence the amount of triamine by-produced from the condensation reaction between the molecules of diamine is increased. Consequently, a fraction of the polyamide takes a cross-linked structure, to degrade the crystallinity, to promote the gelation and to degrade the color tone. As shown also in "Koubunshi Kagaku," the production of triamine is more remarkable in the semiaromatic polyamide than in the aliphatic polyamide. Therefore, for the purpose of obtaining a semiaromatic polyamide in which the proportion of the triamine unit is 0.3 mol% in relation to the diamine unit as in the semiaromatic polyamide of the present invention, the mixing amount of water and/or the organic solvent is required to be 5 parts by mass or less in relation to 100 parts by mass of the total amount of the raw material monomers, and it is more preferable that water be substantially not mixed.

The present invention intends to obtain a semiaromatic polyamide having a high crystallinity, and hence it is preferable that the crystallinity of the semiaromatic polyamide be controlled to fall within a specific range. As the index of the crystallinity in the present invention, it is possible to use the degree of supercooling $\Delta T$ measured by using a differential scanning calorimeter (DSC). The degree of supercooling $\Delta T$ preferably satisfies the range $\Delta T \leq 40°C$ and more preferably satisfies the range $\Delta T \leq 35°C$. When $\Delta T$ exceeds 40°C, unpreferably the crystallinity is insufficient, the improvement effect of the heat resistance is insufficient, and the molded piece is not released sometimes from the mold at the time of molding.

In the present invention, as the following formula shows, the degree of supercooling $\Delta T$ is defined as the difference between the melting point of the polyamide (hereinafter, abbreviated as Tm as the case may be) and the crystallization temperature during cool down (hereinafter, abbreviated as Tcc as the case may be).

$$\Delta T = Tm \text{ (melting point)} - Tcc \text{ (crystallization}$$
$$\text{temperature during cool down)}$$

In the foregoing formula, the melting point (Tm) is defined as the temperature of the endothermic peak appearing in the course of the following temperature increase: by using a differential scanning calorimeter (DSC), in an atmosphere of inert gas, the polyamide is cooled from the molten state down to 25°C at a temperature decrease rate of 20°C/min, and then the temperature is increased at a temperature increase rate of 20°C/min. The temperature of the exothermic peak appearing in the course of the following temperature decrease is defined as the crystallization temperature during cool down (Tcc): the polyamide is cooled from the molten state down to 25°C at a temperature decrease rate of 20°C/min in the same manner as described above. The smaller is the degree of supercooling ΔT, the faster is the crystallization from the molten state of the polymer, and the higher is the crystallinity of the polymer.

The semiaromatic polyamide using the diamine component having an even number of carbon atoms intrinsically has a high crystallinity. For the purpose of achieving a still higher crystallinity, as described above, a technique can be used in which the copolymerization component in the semiaromatic polyamide of the present invention is set to be 0 to 5 mol%. For the purpose of achieving a still higher crystallinity, as described above, a technique may also be used in which the proportion of the triamine unit in relation to the diamine unit in the semiaromatic polyamide is set to be 0.3 mol% or less.

The present invention intends to obtain a semiaromatic polyamide being high in crystallinity and at the same time, having a high heat resistance. Accordingly, when the melting point of the obtained semiaromatic polyamide is lower than 280°C, the heat resistance is insufficient. Therefore, it is necessary to control the melting point of the obtained semiaromatic polyamide to be 280°C or higher. When the melting point is higher than 340°C, the decomposition of the polyamide is promoted and the melt molding is made difficult. Therefore, it is necessary to control the melting point of the semiaromatic polyamide to be 340°C or lower.

The semiaromatic polyamide of the present invention can be produced by using a method having hitherto been known as a method for producing a polyamide, such as a heat polymerization method or a solution polymerization method. Among these, the heat polymerization method is preferably used because of its industrial advantage. Examples of the heat polymerization method include a melt polymerization method, a melt extrusion method and a solid phase polymerization method. The melting point of the semiaromatic polyamide of the present invention is as high as 280°C to 340°C, and is close to the decomposition temperature thereof. Accordingly, the melt polymerization method or the melt extrusion method in which the reaction is allowed to proceed at a temperature equal to or higher than the melting point of the produced polymer to degrade the quality of the product in some cases, and hence is inappropriate in some cases. Therefore, it is preferable to adopt a solid phase polymerization method performed at a temperature lower than the melting point of the produced polymer.

In general, the production of a semiaromatic polyamide frequently includes a step (i) of obtaining reactants from monomers and a step (ii) of polymerizing such reactants; however, in the present invention, for the purpose of obtaining a polyamide in which the proportion of the triamine unit in relation to the diamine unit is 0.3 mol% or less, it is preferable to perform the stage of the step (i) under the conditions that the amount of the water content and/or the solvent in the polymerization system is small, namely, in the presence of water and/or the organic solvent in a total amount of water and the organic solvent of 5 parts by mass or less in relation to 100 parts by mass of the total amount of terephthalic acid and the diamine.

As a method for performing the stage of (i) under a condition that the water content is small, preferably used is, for example, preferably used is a method in which a dicarboxylic acid powder is beforehand heated at a temperature equal to or higher than the melting point of the diamine and equal to or lower than the melting point of the dicarboxylic acid, and the diamine is added to the dicarboxylic acid powder, at the temperature equal to or higher than the melting point of the diamine and equal to or lower than the melting point of the dicarboxylic acid, in such a way that the powder condition of the dicarboxylic acid is maintained, substantially without including water.

Alternatively, as another method for performing the stage of (i) under a condition that the water content is small, also preferably used is a method in which a suspension liquid composed of a diamine in the molten state and solid terephthalic acid is stirred and mixed to yield a mixed liquid, then at a temperature lower than the melting point of the finally produced polyamide, the production of a salt by the reaction between terephthalic acid and the diamine and the production reaction of a low polymer by the polymerization of the salt are performed, and thus a mixture of the salt and the low polymer substance is obtained. In this case, crushing may be performed while the reaction is being allowed to proceed, or after the reaction, the solid matter is once taken out and then may be crushed.

The step (i) is performed at normal pressure, or under pressurized condition ascribable to the water produced by the condensation reaction of the polyamide; the condition for the step (i) can be appropriately selected.

In the present invention, for the purpose of ensuring the efficiency of the reaction between the solid dicarboxylic acid and the liquid diamine, the volume average particle size of the dicarboxylic acid is preferably 5 $\mu$m to 1 mm and more preferably 20 to 200 $\mu$m. The volume average particle size of the dicarboxylic acid set to be 1 mm or less enables the progress of the reaction of the salt to be fast. The volume average particle size of the dicarboxylic acid set to be 5 $\mu$m or more offers an advantage such that the scattering of the powder is alleviated and the handling of the powder is made easy. The method for determining the volume average particle size is described below in Examples.

Next, the step (ii) is described.

The step (ii) is a step in which the salt and the low polymer obtained in the step (i) are subjected to a solid phase polymerization at a temperature lower than the melting point of the finally produced semiaromatic polyamide, to increase the molecular weight of the polyamide to a predetermined molecular weight, and thus the semiaromatic polyamide is obtained.

In the step (ii), when the solid phase polymerization temperature is a temperature equal to or higher than the melting point of the produced semiaromatic polyamide, the amount of triamine is large. Additionally, the thermal decomposition is also promoted. Consequently, unpreferably the color tone of the semiaromatic polyamide is degraded.

The solid phase polymerization temperature is set preferably at 180 to 270°C and more preferably at 200 to 250°C. When the solid phase polymerization temperature is lower than 180°C, the polymerization reaction is insufficient in some cases. On the other hand, when the solid phase polymerization temperature exceeds 270°C, the thermal decomposition of the amide bond is promoted, and the amount of triamine in the obtained semiaromatic polyamide increases in some cases.

The reaction time of the solid phase polymerization reaction in the step (ii) falls within a range preferably from 0.5 to 10 hours and more preferably from 0.5 to 8 hours as measured from the time point where the reaction temperature is reached, from the viewpoint of the balance between the finally reached molecular weight and the productivity.

The solid phase polymerization reaction in the step (ii) may be performed in a flow of an inert gas such as nitrogen or may also be performed under reduced pressure. The solid phase polymerization reaction in the step (ii) may also be performed while the reactants are being allowed to stand still or are being stirred. Also, in this case, the reaction is always performed at a temperature equal to or lower than the melting point of the finally produced semiaromatic polyamide.

For the production of the semiaromatic polyamide of the present invention, a polymerization catalyst is preferably used. Examples of the catalyst used in the present invention include phosphoric acid, phosphorous acid and hypophosphorous acid, and the salts of these acids. In the present invention, the used amount of the catalyst is not particularly limited; however, the catalyst is usually used in an amount of 0 to 2 mol% in relation to the total number of moles of terephthalic acid and the diamine.

A terminal blocking agent is preferably added to the semiaromatic polyamide of the present invention for the purpose of regulating the degree of polymerization and suppressing the thermal decomposition and the coloration when the semiaromatic polyamide is formed into products. As the terminal blocking agent, usually any one or combinations of the following monocarboxylic acids and monoamines are used: monocarboxylic acids such as acetic acid, lauric acid and benzoic acid, and monoamines such as octylamine, cyclohexylamine and aniline. The addition amount of the terminal blocking agent may be determined according to the intended purpose, and hence is not particularly limited; however, usually, the addition amount of the terminal blocking agent is 0 to 5 mol% in relation to the total number of moles of terephthalic acid and the diamine.

Additives such as a filler and a stabilizer may be added, if necessary, to the semiaromatic polyamide of the present invention. Examples of the addition method include the addition at the time of polymerization of the polyamide and the melt kneading with the obtained polyamide. Examples of the additives include: fibrous reinforcing materials such as glass fiber and carbon fiber; fillers such as talc, swelling clay minerals, silica, alumina, glass beads and graphite; pigments such as titanium oxide and carbon black; and additionally, well-known additives such as antioxidant, antistatic agent, flame retardant and flame retardant auxiliary agent.

The relative viscosity of the semiaromatic polyamide of the present invention, obtained as described above, is not particularly limited, and may be appropriately set according to the intended purpose. For example, for the purpose of obtaining a polyamide easily adaptable to molding processing, the relative viscosity is preferably set to be 2.0 or more.

The semiaromatic polyamide of the present invention is particularly preferably used in the application to molding and can be formed into molded articles. For the purpose of producing a molded article from the semiaromatic polyamide of the present invention, common molding processing methods are used. Examples of the molding processing method include: heat-melt molding methods such as injection molding, extrusion molding, blow molding and sintering molding. Such methods yield various types of molded articles such as various types of films and sheets based on T-die extrusion and inflation molding. Various fibers are also obtained with a melt-spinning method, a flush spinning method and an electrospinning method.

The semiaromatic polyamide of the present invention is excellent in heat resistance, mechanical strength and moldability. Consequently, the semiaromatic polyamide of the present invention can be used in a wide range of applications as components and parts such as automobile components, electric/electronic components, sliding parts, tube-related parts, household commodities, metal coating agents, civil engineering and construction components, components of computers and related devices, optical apparatus parts, information/communication equipment components and precision equipment components. Examples of the automobile components include: shift lever, base plate used for pedestal of gear box, cylinder head cover, engine mount, air intake manifold, throttle body, air intake pipe, radiator tank, radiator support, radiator horse, radiator grill, rear spoiler, wheel cover, wheel cap, cowl vent grille, air outlet louver, air scoop, hood bulge, fender, backdoor, fuel sender module, shift lever housing, propeller shaft, stabilizer bar linkage rod, window regulator, door lock, door handle, outside door mirror stay, accelerator pedal, pedal module, seal ring, bearing retainer, gear, wire harness, relay block, sensor housing, encapsulation, ignition coil, distributor, water pump inlet, water pump outlet, thermostat housing, cooling fan, fan shroud, oil pan, oil filter housing, oil filter cap, oil level gauge, timing belt cover, engine cover, fuel tank, fuel tube, fuel cutoff valve, quick connector, canister, fuel delivery pipe, fuel filler neck, fuel pipe joint, lamp reflector, lamp housing, lamp extension and lamp socket. Examples of the electric/electronic components include: connector, LED reflector, switch, sensor, socket, capacitor, jack, fuse holder, relay, coil bobbin, resistor and IC/LED housing. Examples of the sliding parts include: gear wheel, gear, actuator, bearing retainer, bearing, switch, piston, packing, roller and belt. Examples of the tube-related parts include: feed tube, return tube, evapo tube, fuel filler tube, reserve tube, bent tube, oil tube, brake tube, window washer liquid tube, cooler tube for cooling water/cooling medium, tube for air conditioner cooling medium, floor heating tube, tube for fire extinguisher and fire extinguishing equipment, tube for medical cooling equipment, tube for spraying coating material, tube for conveying medical solution, fuel conveying tube, diesel gasoline tube, oil drilling tube, tube for alcohol-containing gasoline, tube for engine cooling liquid (LLC), reservoir tank tube, road heating tube, floor heating tube, infrastructure supply tube and gas tube. Examples of the household commodities include surface material for sports shoes or ski plate. Examples of the metal coating agents include metal coating materials for water circulating members such as metal piping and cistern tank.

Examples of the film include speaker oscillation plate and film capacitor.

Examples of the fiber include foundation cloth for air-bag, heat-resistant filter, fiber for reinforcing radiator hose, bristles for brush, fishing line, tire cord, artificial lawn, carpet, fishing net, rope, fibers for filter and fibers for seat sheet.

Examples

Hereinafter, the present invention is described with reference to Examples. However, the present invention is not limited to these Examples.

According to the following methods, the measurement of the properties of the resins and the evaluation of the performances of the molded articles were performed.

(1) Average Particle Size of Terephthalic Acid

The average particle size of terephthalic acid was measured by using an apparatus for measuring the particle size distribution of the average particle size of fine particles ("LA920," manufactured by Horiba, Ltd.).

(2) Relative Viscosity of Polyamide

The relative viscosity of the polyamide was measured by using 96% sulfuric acid as a solvent with a concentration of 1 g/dL at 25°C.

(3) Crystallization Temperature During Cool Down, Melting Point and Degree of Supercooling of Polyamide

The titled values were measured by using the differential scanning calorimeter DSC-7 manufactured by Perkin-Elmer Corp. as follows. The temperature was increased to 350°C at a temperature increase rate of 20°C/min, and then the temperature was maintained at 350°C for 5 minutes. Then, the temperature giving the top of the exothermic peak appearing in the course of the temperature decrease to 25°C at a temperature decrease rate of 20°C/min was taken as the crystallization temperature during cool down (Tcc). Then, the temperature was maintained at 25°C for 5 minutes. The temperature was again increased at a temperature increase rate of 20°C/min, and the temperature giving the top of the endothermic peak appearing in the course of the temperature increase measurement was taken as the melting point (Tm). The difference between the melting point and the crystallization temperature during cool down (Tm - Tcc) was taken as the degree of supercooling (ΔT).

(4) Quantitative Determination of Triamine in Polyamide

To 10 mg of polyamide, 3 mL of 47% hydrobromic acid was added, and the resulting mixture was heated at 130°C for 16 hours and then allowed to cool to room temperature to prepare a sample solution. To the sample solution, 5 mL of a 20% aqueous solution of sodium hydroxide was added to make the sample solution alkaline, then the sample solution was transferred into a separating funnel and 8 mL of chloroform was added to the sample solution. The sample solution was stirred and then allowed to stand still, and only the chloroform phase was transferred into a test tube and concentrated with a gas blowing concentrator. To the concentrated sample, 1.5 mL of chloroform was added, the resulting mixture was filtered with a membrane filter, and the filtrate was used as a measurement sample. The measurement sample was analyzed with a gas chromatograph (trade name: "Agilent 6890N," manufactured by Agilent Technologies, Inc.) equipped with a mass spectrometer. By using a calibration curve prepared with a diamine and a triamine as standard samples, the diamine and the triamine in the polyamide were quantitatively determined, and the molar ratio of the triamine to the diamine was calculated. As the standard substance for the diamine, the diamine used for polymerization was used. As the standard substance for the triamine, used was a triamine compound obtained by allowing the diamine used for the polymerization to react by using palladium oxide as a catalyst under the conditions that the diamine was heated and stirred in an autoclave at 240°C for 3 hours.

(5) Flexural Strength and Flexural Modulus of Elasticity of Molded Piece

By using an injection molding machine ("I100E-i3AS," manufactured by Toshiba Machine Co., Ltd.), the polyamide was filled in a mold, cooled and then a molded piece (127 mm x 12.7 mm x 3.2 mm) was taken out with the aid of an ejection pin. The cylinder preset temperature was set at (the melting point + 25°C), the injection pressure was set at 100 MPa, the injection time was set at 8 seconds, the temperature of the mold was set at (the melding point - 185°C) and the cooling time was set at 10 seconds. By using the prepared molded piece, the flexural strength and the flexural modulus of elasticity were measured according to ASTM D 790.

(6) Deflection Temperature under Load of Molded Piece

By using the molded piece prepared in foregoing (5), the flexural strength and the flexural modulus of elasticity were measured according to ASTM D648 under a load of 1.8 MPa.

(7) Continuous Productivity

In the same manner as in foregoing (5), 100 pieces of molded pieces were continuously prepared, and the number of the molded pieces which were able to be pushed out with the aid of an ejection pin was counted. Practically, the number of the pushed out molded pieces is preferably 90 or more and more preferably 95 or more.

(8) Pressure Rising Time of Filter

The polyamide was placed in a single screw extruder with the temperature of the cylinder heated to 320°C, and the molten polymer was extruded after filtration with a plain weave wire mesh filter (#800, manufactured by Nippon Seisen Co., Ltd.) having a breaker plate on the back side thereof. In this case, the extrusion rate was set so as for the flow rate per unit area of the filter to be 1 kg/cm$^2$/hour, and the pressure upstream of the filter was recorded as a function of time. The time elapsed from the initial stage of the extrusion until the change of the pressure upstream of the tilter reached 10 MPa was measured. Practically, the elapsed time is preferably 6 hours or more.
The raw materials used in Examples and Comparative Examples are shown below.

(1) Dicarboxylic Acid Components

- ● terephthalic acid (melting point: 300°C or higher)
- ● isophthalic acid (melting point: 343°C)
- ● adipic acid (melting point: 153°C)

(2) Diamine Components

- 1,8-octanediamine (melting point: 51°C)
- 1,9-nonanediamine (melting point: 36°C)
- 1,10-decanediamine (melting point: 62°C)
- 1,12-dodecanediamine (melting point: 68°C)

Example 1

[Step (i)]

In an autoclave, 1,10-decanediamine (5050 parts by mass) as a diamine component, powdery terephthalic acid (4870 parts by mass) having an average particle size of 80 $\mu$m, benzoic acid (72 parts by mass) as a terminal blocking agent and sodium hypophosphite monohydrate (6 parts by mass) as a polymerization catalyst were placed, heated to 100°C, and then the stirring of the resulting mixture was started by using a double helical stirring blade at a number of rotations of 28 rpm to heat the mixture for 1 hour. The molar ratio between the raw material monomers was 1,10-decanediamine:terephthalic acid = 50:50. The mixture was increased in temperature to 230°C while the number of rotations was being maintained at 28 rpm, and then the mixture was heated at 230°C for 3 hours. The production reactions of the salt and the low polymer and the crushing were performed simultaneously. The water vapor produced by the reactions was discharged to reduce the pressure, and then the obtained reactants were taken out.

[Step (ii)]

The reactants obtained in the step (i) were heated in a dryer, in a nitrogen gas flow at normal pressure, at 230°C for 5 hours to polymerize the reactants and yield a polyamide.

Example 2

[Step (i)]

A mixture composed of a terephthalic acid powder (4870 parts by mass) having a volume average particle size of 80 $\mu$m, sodium hypophosphite (6 parts by mass) as a polymerization catalyst and benzoic acid (72 parts by mass) as a terminal blocking agent was fed to a ribbon blender-type reactor, and heated to 170°C while the mixture was being stirred under sealing with nitrogen by using a double helical stirring blade at a number of rotations of 30 rpm. Then, while the temperature was being maintained at 170°C and the number of rotations was also being maintained at 30 rpm, decanediamine (5050 parts by mass, 100% by mass) heated to 100°C was added continuously (continuous liquid injection type) to the terephthalic acid powder by using a liquid injection device at a rate of 28 parts by mass/min over 3 hours to yield the reactants.

[Step (ii)]

The reactants obtained in the step (i) were increased in temperature to 230°C successively in the ribbon blender-type reactor used in the step (i), in a nitrogen gas flow, and heated at 230°C for 5 hours to polymerize the reactants and yield a polyamide.

Examples 3 to 6 and 9 and 10, and Comparative Example 1

Semiaromatic polyamides were obtained in the same manner as in Example 2 except that the types of the monomers used and the production conditions were altered as shown in Table 1, and the obtained semiaromatic polyamides were evaluated.

Example 7

[Step (i)]

In an autoclave, 1,10-decanediamine (5050 parts by mass) as a diamine component, powdery terephthalic acid (4870 parts by mass) having an average particle size of 80 $\mu$m, benzoic acid (72 parts by mass) as a terminal blocking agent, sodium hypophosphite monohydrate (6 parts by mass) as a polymerization catalyst and 400 parts by mass of distilled water (4 parts by mass in relation to 100 parts by mass of the total amount of the raw material monomers) were placed, heated to 100°C, and then the stirring of the resulting mixture was started at a number of rotations of 28 rpm to heat the mixture for 1 hour. The mixture was increased in temperature to 230°C while the number of rotations was being maintained at 28 rpm, and then the mixture was heated at 230°C for 3 hours. While the production reactions of the salt and the low polymer were being performed, the obtained solid matter was crushed. The water vapor was discharged to reduce the pressure, and then the obtained reactants were taken out.

[Step (ii)]

The reactants obtained in the step (i) were heated in a dryer, in a nitrogen gas flow at normal pressure, at 230°C for 5 hours to polymerize the reactants and yield the polyamide.

Example 8

[Step (i)]

Reactants were obtained in the same manner as in Example 1.

[Step (ii)]

The reactants obtained in the step (i) were fed to a double screw extruder (30 mm$\phi$, L/D = 45, two vents) and subjected to melt polymerization to yield a pellet-like polyamide. The temperature of the cylinder of a double screw extruder was set at 330°C, and the temperature of the resin was regulated at 335°C. The average residence time was set at 3 minutes. The hopper was sealed with a nitrogen gas having an oxygen content of 50 ppm or less. The first vent was opened and sealed with the aforementioned nitrogen gas, and the second vent maintained at a degree of reduced pressure of 50 mmHg by using a vacuum pump. The number of rotations of the screw was set at 40 rpm, and the feed rate of the low polymer from the hopper was set at 1 kg/hour.

Comparative Example 2

[Step (i)]

In an autoclave, 1,10-decanediamine (5050 parts by mass) as a diamine component, powdery terephthalic acid (4870 parts by mass) having an average particle size of 80 $\mu$m, benzoic acid (72 parts by mass) as a terminal blocking agent, sodium hypophosphite monohydrate (6 parts by mass) as a polymerization catalyst and 9200 parts by mass of distilled water (92 parts by mass in relation to 100 parts by mass of the total amount of the raw material monomers) were placed, heated to 100°C, and then the stirring of the resulting mixture was started at a number of rotations of 28 rpm to heat the mixture for 1 hour. The mixture was increased in temperature to 230°C while the number of rotations was being maintained at 28 rpm, and then the mixture was heated at 230°C for 3 hours. While the production reactions of the salt and the low polymer were being performed, the obtained solid matter was crushed. The water vapor was discharged to reduce the pressure, and then the obtained reactants were taken out.

[Step (ii)]

The reactants obtained in the step (i) were heated in a dryer, in a nitrogen gas flow at normal pressure, at 230°C for 5 hours to polymerize the reactants and yield a polyamide.

Comparative Example 3

[Step (i)]

In an autoclave, 1,10-decanediamine (5050 parts by mass) as a diamine component, powdery terephthalic acid (4870 parts by mass) having an average particle size of 80 $\mu$m, benzoic acid (72 parts by mass) as a terminal blocking agent, sodium hypophosphite monohydrate (6 parts by mass) as a polymerization catalyst and 600 parts by mass of distilled water (92 parts by mass in relation to 100 parts by mass of the total amount of the raw material monomers) were placed, heated to 100°C, and then the stirring of the resulting mixture was started at a number of rotations of 28 rpm to heat the mixture for 1 hour. The mixture was increased in temperature to 230°C while the number of rotations was being maintained at 28 rpm, and then the mixture was heated at 230°C for 3 hours. While the production reactions of the salt and the low polymer were being performed, the obtained solid matter was crushed. The water vapor was discharged to reduce the pressure, and then the obtained reactants were taken out.

[Step (ii)]

The reactants obtained in the step (i) were heated in a dryer, in a nitrogen gas flow at normal pressure, at 230°C for 5 hours to polymerize the reactants and yield a polyamide.

Table 1 shows the compositions, the production conditions and the values of the properties of the resins.

[Table 1]

| | | | Examples | | | | | | | | | | Comparative Examples | | |
|---|---|---|---|---|---|---|---|---|---|---|---|---|---|---|---|
| | | | 1 | 2 | 3 | 4 | 5 | 6 | 7 | 8 | 9 | 10 | 1 | 2 | 3 |
| Resin composition (molar ratio) | Diamine component | 1,10-Decanediamine | 50 | 50 | 50 | - | - | - | 50 | 50 | 50 | 50 | - | 50 | 50 |
| | | 1,12-Dodecanediamine | - | - | - | 50 | 50 | - | - | - | - | - | - | - | - |
| | | 1,8-Octanediamine | - | - | - | - | - | 50 | - | - | - | - | - | - | - |
| | | 1,9-Nonanediamine | - | - | - | - | - | - | - | - | - | - | 50 | - | - |
| | Dicarboxylic acid component | Terephthalic acid | 50 | 50 | 45 | 50 | 47 | 50 | 50 | 50 | 40 | 44 | 50 | 50 | 50 |
| | | Isophthalic acid | - | - | 5 | - | 3 | - | - | - | 5 | - | - | - | - |
| | | Adipic acid | - | - | - | - | - | - | - | - | 5 | 6 | - | - | - |
| Production conditions | Addition amount of water* | parts by mass | 0 | 0 | 0 | 0 | 0 | 0 | 4 | 0 | 0 | 0 | 0 | 92 | 6 |
| | Temperature of diamine | °C | - | 100 | 100 | 110 | 110 | 90 | - | - | 100 | 100 | 80 | - | - |
| | Temperature of step (i) | °C | 230 | 170 | 170 | 170 | 170 | 165 | 230 | 230 | 170 | 145 | 170 | 230 | 230 |
| | Temperature of step (ii) | °C | 230 | 230 | 230 | 220 | 220 | 240 | 230 | 335 | 230 | 230 | 230 | 230 | 230 |

(continued)

| Properties of resin | | | Examples | | | | | | | | | | Comparative Examples | | |
|---|---|---|---|---|---|---|---|---|---|---|---|---|---|---|---|
| | | | 1 | 2 | 3 | 4 | 5 | 6 | 7 | 8 | 9 | 10 | 1 | 2 | 3 |
| | Relative viscosity | | 2.44 | 2.39 | 2.42 | 2.39 | 2.36 | 2.55 | 2.29 | 2.47 | 2.31 | 2.55 | 2.40 | 2.10 | 2.18 |
| | Melting point | °C | 315 | 316 | 311 | 299 | 294 | 333 | 315 | 314 | 301 | 308 | 313 | 315 | 316 |
| | Crystallization temperature during cool down | °C | 283 | 283 | 275 | 266 | 252 | 303 | 283 | 279 | 255 | 264 | 271 | 282 | 282 |
| | Degree of supercooling (ΔT) | °C | 32 | 33 | 36 | 33 | 37 | 30 | 32 | 35 | 39 | 38 | 42 | 33 | 34 |
| | Content of triamine | mol% | 0.14 | 0.12 | 0.15 | 0.12 | 0.10 | 0.20 | 0.27 | 0.26 | 0.15 | 0.07 | 0.18 | 0.67 | 0.32 |

*Addition amount of water: The addition amount of water (parts by mass) in relation to 100 parts by mass of the total amount of terephthalic acid and diamine.

Example 11

The polyamide obtained in Example 1 was filled in a mold by using an injection molding machine ("I100E-i3AS," manufactured by Toshiba Machine Co., Ltd.) and cooled, and then the molded piece (127 mm x 12.7 mm x 3.2 mm) was pushed with an ejection pin and taken out. The cylinder preset temperature was set at (the melting point + 25°C), the injection pressure was set at 100 MPa, the injection time was set at 8 seconds, the temperature of the mold was set at (the melting point - 185°C) and the cooling time was set at 10 seconds.
Examples 12 to 18 and 20 and 21, and Comparative Examples 4 to 6
Molded pieces were prepared by performing the same operations as in Example 11 except that the polyamides used were altered as shown in Table 2.

Example 19

A molded piece was prepared by adding 30 parts by mass of a glass fiber (diameter: 10 $\mu$m, length: 3 mm) to 70 parts by mass of the polyamide resin obtained in Example 1 and by performing molding at a resin temperature of 340°C.
Table 2 shows the resin compositions and the values of the properties of the molded pieces.
[Table 2]

| | | | Examples | | | | | | | | | | | Comparative Examples | | |
|---|---|---|---|---|---|---|---|---|---|---|---|---|---|---|---|---|---|
| | | | 11 | 12 | 13 | 14 | 15 | 16 | 17 | 18 | 19 | 20 | 21 | 4 | 5 | 6 |
| Resin composition of molded piece | Type of polyamide | | Example 1 | Example 2 | Example 3 | Example 4 | Example 5 | Example 6 | Example 7 | Example 8 | Example 1 | Example 9 | Example 10 | Comparative Example 1 | Comparative Example 2 | Comparative Example 3 |
| | Content of polyamide | parts by mass | 100 | 100 | 100 | 100 | 100 | 100 | 100 | 100 | 70 | 100 | 100 | 100 | 100 | 100 |
| | Content of glass fiber | parts by mass | 0 | 0 | 0 | 0 | 0 | 0 | 0 | 0 | 30 | 0 | 0 | 0 | 0 | 0 |
| Molding conditions | Cylinder temperature | °C | 350 | 351 | 346 | 334 | 329 | 368 | 350 | 349 | 350 | 336 | 343 | 348 | 350 | 351 |
| | Mold temperature | °C | 130 | 131 | 126 | 114 | 109 | 148 | 130 | 129 | 130 | 116 | 123 | 128 | 130 | 131 |
| Properties of molded pieces | Flexural strength | MPa | 150 | 151 | 145 | 140 | 139 | 148 | 150 | 151 | 272 | 122 | 116 | 140 | 152 | 152 |
| | Flexural modulus of elasticity | GPa | 3.1 | 3.1 | 2.9 | 2.8 | 2.8 | 3.2 | 3.1 | 3.1 | 7.8 | 2.3 | 2.2 | 2.7 | 3.2 | 3.1 |
| | Deflection temperature under load | °C | 131 | 133 | 126 | 117 | 114 | 141 | 132 | 131 | 299 | 110 | 112 | 128 | 135 | 134 |
| | Continuous moldability | pieces | 100 | 100 | 100 | 100 | 100 | 100 | 100 | 100 | 100 | 90 | 91 | 75 | 95 | 96 |
| | Pressure rising time of filter | hours | >6 | >6 | >6 | >6 | >6 | >6 | >6 | >6 | >6 | >6 | >6 | >6 | 3 | 5.5 |

EP 2 554 566 A1

16

The semiaromatic polyamides obtained in Examples 1, 2, 4, and 6 to 8 each had a degree of supercooling falling within the preferable range (ΔT equal to or smaller than 35°C) in the present invention, and each have been found to have a high crystallinity. Further, these semiaromatic polyamides were excellent in heat resistance and moldability. Moreover, these semiaromatic polyamides each had a proportion of the triamine unit as small as 0.3 mo% or less in the semiaromatic polyamide in relation to the diamine unit. Accordingly, in these semiaromatic polyamides, the gelation was suppressed.

In the semiaromatic polyamides obtained in Examples 3 and 5, isophthalic acid was copolymerized as the copolymerization component. However, the proportion of isophthalic acid was 5 mol% or less, and hence the degree of supercooling was within the range (ΔT equal to or smaller than 40°C) specified in the present invention. Moreover, these semiaromatic polyamides each had a proportion of the triamine unit as small as 0.3 mo% or less in the semiaromatic polyamide in relation to the diamine unit. Accordingly, in these semiaromatic polyamides, the gelation was suppressed.

In Example 7, the polyamide was polymerized in the presence of 5 parts by mass or less of water in relation to 100 parts by mass of the total amount of terephthalic acid and diamine. Accordingly, the proportion of the triamine unit in the semiaromatic polyamide was 0.3 mol% or less in relation to the diamine unit, and hence the gelation was suppressed.

In Examples 9 and 10, one or two dicarboxylic acids other than terephthalic acid were copolymerized in an amount exceeding 5% in relation to the total number of moles of the dicarboxylic acid component and the diamine component. Accordingly, in Examples 20 and 21 using the polyamides obtained in Examples 9 and 10, respectively, room for improvement was found in moldability; however, the semiaromatic polyamides of Examples 20 and 21 were sufficiently practically usable.

The molded pieces obtained in Example 11 to 18 used the semiaromatic polyamides obtained in Examples 1 to 8, respectively, and hence were high in flexural strength and flexural modulus of elasticity, excellent in mechanical strength, and also excellent in heat resistance. Further, in these molded pieces, the proportion of the triamine unit in the polyamide was small. Accordingly, in these molded pieces, gelation was suppressed.

In Example 19, a molded piece was obtained from a resin composition in which glass fiber was included in the polyamide obtained in Example 1. Accordingly, the molded piece was remarkably excellent in mechanical strength and heat resistance.

In Comparative Example 1, a diamine having an odd number of carbon atoms, namely, 1,9-nonanediamine, was used as the diamine component. Consequently, the degree of supercooling was high and the obtained semiaromatic polyamide was low in crystallinity.

In each of Comparative Examples 2 and 3, the polyamide was polymerized in the presence of water in an amount exceeding 5 parts by mass in relation to 100 parts by mass of the total amount of terephthalic acid and diamine. Accordingly, the content of triamine in the polyamide exceeded 0.3 mol%, a large amount of gel was included in the polyamide, and the pressure rising time of the filter was short.

In the molded pieces obtained in Comparative Examples 4 to 6, the polyamides obtained in Comparative Examples 1 to 3 were used, respectively. Accordingly, the molded pieces obtained in Comparative Examples 4 to 6 were poor in moldability and gel quality.

Industrial Applicability

The semiaromatic polyamide of the present invention is excellent in heat resistance, high crystallinity and moldability, and hence useful, for example, in the fields of electric/electronic components and molded articles for automobile components.

**Claims**

1. A semiaromatic polyamide comprising a terephthalic acid component and a diamine component, wherein the diamine component is any of 1,8-octanediamine, 1,10-decanediamine and 1,12-dodecane, and a proportion of a triamine unit in relation to a diamine unit in the polyamide is 0.3 mol% or less.

2. The semiaromatic polyamide according to claim 1, comprising a copolymerization component other than the terephthalic acid component and the diamine component, which are main components, in a proportion of 0 to 5 mol% in relation to a total number of moles of raw material monomers.

3. The semiaromatic polyamide according to claim 1 or 2, wherein a melting point thereof measured by using a differential scanning calorimeter is 280°C to 340°C.

4. The semiaromatic polyamide according to any one of claims 1 to 3, wherein a degree of supercooling ΔT measured by using the differential scanning calorimeter is 40°C or less.

5. A method for producing the semiaromatic polyamide according to any one of claims 1 to 4, comprising the following steps (i) and (ii):

(i) obtaining a mixed liquid by stirring and mixing a suspension liquid including a diamine in a molten state and solid terephthalic acid at 80°C or higher to 150°C or lower, in the presence of water and/or an organic solvent having a total amount of water and the organic solvent of 5 parts by mass in relation to 100 parts by mass of a total amount of terephthalic acid and the diamine; and
(ii) obtaining a mixture of a salt and a low polymeric substance by performing, in the mixed liquid obtained in the step (i) and at a temperature lower than a melting point of a finally produced polyamide, a production of the salt due to a reaction between terephthalic acid and the diamine and a production reaction of a low polymer due to a polymerization of the salt.

6. A method for producing the semiaromatic polyamide according to any one of claims 1 to 4, comprising the following steps (i) and (ii):

(i) adding the diamine to a terephthalic acid powder in such a way that the terephthalic acid powder is beforehand heated to a temperature equal to or higher than a melting point of the diamine and equal to or lower than a melting point of the dicarboxylic acid, and the diamine is added to the terephthalic acid powder at a temperature equal to or higher than the melting point of the diamine and equal to or lower than a melting point of terephthalic acid, so as to maintain a powder state of terephthalic acid, without substantially including water; and
(ii) obtaining a mixture of a salt and a low polymeric substance by performing, in the mixed liquid obtained in the step (i) and at a temperature lower than the melting point of the finally produced polyamide, a production of the salt due to a reaction between terephthalic acid and the diamine and a production reaction of a low polymer due to a polymerization of the salt.

7. The method for producing a polyamide according to claim 5 or 6, further comprising the following step (iii) :

(iii) performing a solid phase polymerization of the mixture obtained in the step (ii) while maintaining a temperature lower than the melting point of the produced polyamide.

8. A molded article produced by molding the polyamide according to any one of claims 1 to 4.

| INTERNATIONAL SEARCH REPORT | International application No. |
|---|---|
| | PCT/JP2011/055987 |

**A. CLASSIFICATION OF SUBJECT MATTER**
*C08G69/26*(2006.01)i

According to International Patent Classification (IPC) or to both national classification and IPC

**B. FIELDS SEARCHED**

Minimum documentation searched (classification system followed by classification symbols)
C08G69/26

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-53359 A  (Toray Industries, Inc.), 11 March 2010 (11.03.2010), claims; paragraphs [0032], [0044], [0047] (Family: none) | 1-4,8 |
| X | JP 2001-348427 A  (Kuraray Co., Ltd.), 18 December 2001 (18.12.2001), claims; paragraphs [0013], [0015] (Family: none) | 1-4,8 |
| X | JP 3-243623 A  (Mitsubishi Kasei Corp.), 30 October 1991 (30.10.1991), claims; page 2, lower right column, line 18 to page 3, upper left column, line 6 (Family: none) | 5,7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 May, 2011 (23.05.11) | 14 June, 2011 (14.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 554 566 A1

**INTERNATIONAL SEARCH REPORT**

International application No.

PCT/JP2011/055987

C (Continuation).  DOCUMENTS CONSIDERED TO BE RELEVANT

| Category* | Citation of document, with indication, where appropriate, of the relevant passages | Relevant to claim No. |
|---|---|---|
| A | JP 10-509761 A  (E.I. Du Pont De Nemours & Co.),<br>22 September 1998 (22.09.1998),<br>entire text<br>& US 5731403 A      & EP 793683 A<br>& WO 1996/016108 A1    & KR 10-0255828 B<br>& CN 1166845 A | 1-8 |
| A | JP 2008-239908 A  (Mitsui Chemicals, Inc.),<br>09 October 2008 (09.10.2008),<br>claims<br>(Family: none) | 1-8 |

Form PCT/ISA/210 (continuation of second sheet) (July 2009)

**EP 2 554 566 A1**

**REFERENCES CITED IN THE DESCRIPTION**

**Patent documents cited in the description**

- JP 6239990 A
- JP 2008239908 A

- JP 2001200053 A

**Non-patent literature cited in the description**

- *Koubunshi Kagaku,* 1968, vol. 25 (277), 318